# FASCICULE DE BREVET EUROPEEN

(11) **EP 1 016 825 B1**
(45) Date de publication et mention de la délivrance du brevet: **27.08.2003**
(21) Numéro de dépôt: 99402850.4
(22) Date de dépôt: 17.11.1999
(51) Int. Cl.: F23D 14/22, F23D 14/32

(54) **Procédé de combustion et ses utilisations pour l'élaboration de verre et de métal**
Verbrennungsverfahren und dessen Verwendung zur Erzeugung von Glas und Metall
Combustion method and uses thereof in producing glass and metal

(30) Priorité: 30.12.1998 FR 9816634
(43) Date de publication de la demande: 05.07.2000
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Legiret, Thierry, 75321 Paris cedex 07 (FR); Rio, Laurent, 75321 Paris cedex 07 (FR)
(74) Mandataire: Vesin, Jacques

(56) Documents cités:
- EP-A- 0 643 262
- EP-A- 0 763 692
- US-A- 4 933 163

## Description

La présente invention a pour objet un procédé de combustion d'un combustible dans un brûleur du type comprenant un injecteur, lequel injecteur comporte au moins un premier passage intérieur d'amenée de comburant, un passage intermédiaire d'amenée de combustible entourant extérieurement le premier passage d'amenée de comburant, et un deuxième passage extérieur d'amenée de comburant entourant extérieurement le passage d'amenée de combustible.

L'invention s'applique en particulier à l'apport de chaleur dans les procédés d'élaboration de matériaux.

De nombreux procédés d'élaboration de matériaux tels que le verre et les métaux ferreux ou non-ferreux font intervenir des étapes de chauffage où on utilise des brûleurs du type précité avec, par exemple, du méthane comme combustible et de l'oxygène comme comburant.

Les flammes produites par ces brûleurs doivent respecter certaines contraintes.

Par exemple, dans les procédés d'élaboration du verre, du verre fondu est généralement transféré entre deux étapes successives du procédé par l'intermédiaire de canaux ou « feeders ». Dans un tel canal, le verre situé à proximité des parois du canal tend à se refroidir beaucoup plus vite que le verre plus éloigné de ces parois. En conséquence, il est souhaitable de pouvoir réchauffer la périphérie du verre sans réchauffer le coeur de ce dernier, pour maintenir un profil de température sensiblement homogène dans les sections du matériau fondu.

A cette fin, des brûleurs du type précité sont disposés dans les parois de ces canaux de transfert. Malheureusement, les procédés de combustion connus utilisant les brûleurs du type précité ne permettent pas toujours de régler la longueur des flammes produites pour chauffer de manière satisfaisante les sections du matériau fondu canalisé.

Tel est le cas pour le procédé décrit par le document EP-A-763 692 où les vitesses de sortie de l'injecteur du combustible et de l'oxygène interne sont relativement élevées.

De manière analogue, les procédés de combustion connus ne permettent pas de respecter les contraintes concernant les concentrations des espèces oxydantes CO et O₂, liées à la longueur de la flamme, en sortie des brûleurs disposés à proximité des bains de matériaux fondus dans les procédés d'élaboration de métaux.

L'invention a pour but de résoudre ces problèmes en fournissant un procédé de combustion pour un brûleur du type précité permettant de régler finement la longueur de la flamme et des concentrations d'espèces chimiques dans celle-ci, notamment CO et O₂.

A cet effet, l'invention est caractérisée en ce qu'on alimente le passage d'amenée de combustible de sorte que la vitesse de sortie du combustible de ce passage soit comprise entre environ 1 et 15 m/s, et en ce qu'on alimente le premier passage d'amenée de comburant et le passage d'amenée de combustible de sorte que le rapport R entre la vitesse de sortie du comburant du premier passage d'amenée du comburant et la vitesse de sortie du combustible du passage d'amenée de combustible soit supérieur à environ 3, la modification de la proportion du débit total de comburant passant par le premier passage d'amenée de comburant permettant un réglage de la longueur de la flamme.

Selon des modes particuliers de réalisation, le procédé selon l'invention peut comprendre l'une ou plusieurs des caractéristiques suivantes, prises isolément ou selon toutes les combinaisons techniquement possibles :
- on alimente le passage d'amenée de combustible de sorte que la vitesse de sortie du combustible de ce passage soit supérieure à environ 5 m/s ;
- on alimente le premier passage d'amenée de comburant et le passage d'amenée de combustible de sorte que le rapport R soit inférieur à environ 20;
- on alimente le premier passage d'amenée de comburant et le passage d'amenée de combustible de sorte que le rapport R soit inférieur à environ 10 ;
- on alimente le deuxième passage d'amenée de comburant de sorte que la vitesse de sortie du comburant de ce deuxième passage soit comprise entre environ 0,1 et 50 m/s et de préférence entre environ 1 et 5 m/s.
- on alimente les premier et deuxième passages d'amenée de comburant de sorte que moins de 50%, et de préférence moins d'environ 20%, du débit total de comburant passe par le premier passage d'amenée de comburant ;
- on alimente en air un passage périphérique de l'injecteur, lequel passage périphérique entoure extérieurement le deuxième passage d'amenée de comburant ;
- on alimente les premier et deuxième passages d'amenée de comburant en oxygène de pureté supérieure à 80% ; et
- on alimente le passage d'amenée de combustible essentiellement en hydrocarbure gazeux, notamment en méthane ou en butane.

L'utilisation d'un procédé tel que défini ci-dessus permet, en modifiant la proportion du débit total de comburant passant par le premier passage d'amenée de comburant, un réglage du pouvoir oxydant d'une flamme de chauffage produite lors de l'élaboration de métal.

L'invention sera mieux comprise à la lecture de la description qui va suivre, donnée uniquement à titre d'exemple, et faite en se référant aux dessins annexés, sur lesquels :
- la figure 1 est une vue schématique transversale, partiellement en coupe, d'un brûleur destiné à mettre en oeuvre un procédé selon l'invention ;
- les figures 2 et 3 sont des diagrammes illustrant respectivement les possibilités de réglage de la proportion relative de CO dans la flamme et de la longueur de la flamme en sortie du brûleur de la figure 1 grâce à un procédé selon l'invention, et
- la figure 4 est une vue schématique partielle agrandie, en coupe transversale, de l'extrémité aval d'une variante du brûleur de la figure 1.

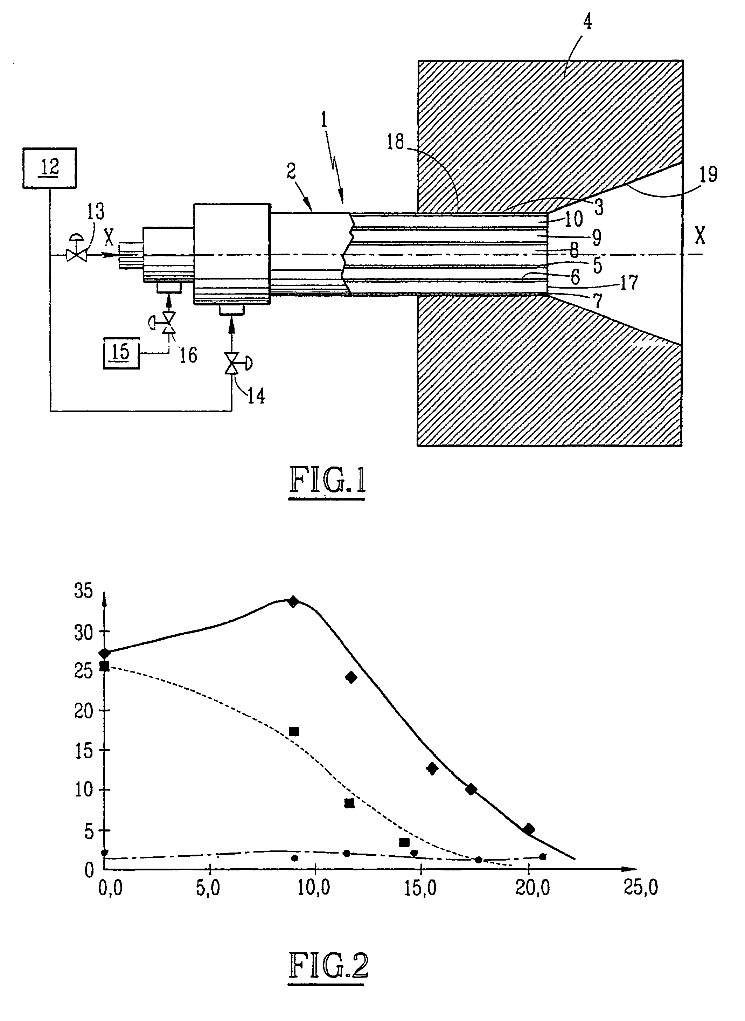

La figure 1 représente schématiquement un brûleur 1 comprenant un injecteur 2 inséré dans l'orifice ou ouvreau 3 axisymétrique d'un bloc 4 en matériau réfractaire.

Ce bloc 4 est lui-même monté dans la paroi d'un four ou, par exemple, d'un « feeder » d'une installation d'élaboration de verre.

L'injecteur 2 comprend essentiellement trois tubes coaxiaux 5, 6 et 7 d'axe X-X et de sections circulaires.

Le tube intérieur 5 délimite intérieurement un premier passage intérieur 8 d'amenée de comburant. Le tube intermédiaire 6 entoure extérieurement le tube 5 et délimite avec celui-ci un passage intermédiaire 9 d'amenée de combustible. Le tube extérieur 7 entoure extérieurement le tube intermédiaire 6 et délimite avec celui-ci un deuxième passage extérieur 10 d'amenée de comburant.

Une source 12 de comburant, par exemple de l'oxygène (O₂) de pureté supérieure à 80%, est reliée par l'intermédiaire de vannes 13 et 14 respectivement aux extrémités amont (à gauche sur la figure 1) des passages 8 et 10 d'amenée de comburant.

Une source de combustible 15, par exemple du méthane gazeux (CH₄), est reliée par l'intermédiaire d'une vanne 16 à l'extrémité amont (à gauche sur la figure 1) du passage 9 d'amenée du combustible.

Les extrémités aval des tubes 5 à 7 sont sensiblement alignées transversalement à l'axe X-X en délimitant ainsi une face aval ou de sortie 17 de l'injecteur 2. Toutefois, et comme décrit dans le document EP-A-763 692 précité, les extrémités aval des tubes 5 à 7 peuvent être décalées le long de l'axe X-X et l'un des tubes 5 à 7 peut être désaxé par rapport aux autres tubes.

L'ouvreau 3 comprend une partie amont 18 de section circulaire et une partie aval 19 de forme générale tronconique divergeant vers l'aval. L'extrémité aval de l'injecteur 2 est insérée dans la partie amont 18 de l'ouvreau 3. La face aval 17 de l'injecteur 2 est située au niveau de la jonction des parties amont 18 et aval 19 de l'ouvreau 3. L'ouvreau 3 et l'injecteur 2 sont coaxiaux.

En fonctionnement, une veine du combustible éjectée du passage 9, d'une part, entoure extérieurement une veine d'oxygène provenant du passage intérieur 8 et, d'autre part, est entourée extérieurement par une autre veine d'oxygène provenant du passage extérieur 10. Une flamme est formée en sortie de l'injecteur 2 par la combustion du CH₄ en présence de l'O₂. Lors de la réaction de combustion, l'O₂ est consommé pour former du CO puis du CO_{2.} et de l'eau (H₂O) à partir du CH₄.

Ainsi, la concentration axiale (selon l'axe X-X) d'O₂ diminue progressivement depuis la sortie de l'injecteur 2 vers l'extrémité aval de la flamme formée, tandis que la concentration de CO₂ augmente. La concentration de CO augmente puis diminue depuis la sortie de l'injecteur 2 jusqu'à l'extrémité aval de la flamme. Ainsi, la concentration axiale de CO a un profil général en pic.

Les vannes 13 et 14 permettent de faire varier la quantité d'oxygène passant respectivement dans les passages 8 et 10 d'amenée de comburant, et donc de régler les vitesses de l'oxygène en sortie de ces passages 8 et 10. Les vannes 13 et 14 permettent également de régler la répartition du débit total d'oxygène entre le premier passage 8 et le deuxième passage 10 d'amenée de comburant. La vanne 16 permet de faire varier la quantité de méthane passant dans le passage 9 d'amenée de combustible et donc de régler la vitesse du méthane en sortie de ce passage 9.

Selon un premier exemple, on règle la vanne 16 de sorte que la vitesse du combustible en sortie du passage 9 soit d'environ 11 m/s.

La figure 2 est un diagramme qui illustre les possibilités de réglage des caractéristiques de la flamme ainsi offertes.

Sur ce diagramme, l'axe des abscisses représente la proportion P d'O₂ injecté dans le passage intérieur 8 par rapport à l'O₂ total injecté dans les passages 8 et 10. L'axe des ordonnées représente la proportion de CO par rapport à toutes les espèces présentes dans l'axe X-X de la flamme à 0,635 m de la sortie de l'injecteur 2.

Une première courbe de mesure, en pointillés, correspond à un procédé de combustion mis en oeuvre avec un brûleur 1 dont le tube intérieur 5 a un diamètre intérieur d'environ 2 mm et le tube intermédiaire 6 a un diamètre intérieur d'environ 15 mm. La puissance du brûleur 1 est d'environ 60 kW ce qui correspond environ à l'injection de 6 Nm³/h de CH₄ et à l'injection totale de 12 Nm³/h d'O₂.

Pour P = O%, la proportion de CO est d'environ 25%. La flamme produite mesure donc plus de 0,635m. On constate qu'elle mesure en fait environ 1m.

Cette première courbe décroît de manière relativement prononcée quand P varie d'environ 0 à 15%. Cette décroissance correspond à la partie décroissante du profil général en pic de la concentration axiale en CO dans la flamme.

En conséquence, plus la proportion P augmente, plus la longueur de la flamme produite diminue, et cette variation est relativement importante quand P varie entre 0 et 15%. Il est donc possible de régler la longueur de la flamme produite en jouant sur P.

La vitesse de l'O₂ en sortie du passage interne 8 est d'environ 212 m/s et 33 m/s quand P vaut respectivement environ 20 % et 3,10 %. Ainsi, le rapport R entre la vitesse de l'O₂ en sortie du passage interne 8 et la vitesse du CH₄ en sortie du passage 9 vaut environ 19,3 et 3 quand P vaut respectivement 20 % et 3,1 %.

La deuxième courbe de mesure, en trait fort, correspond à un procédé de combustion qui se distingue de celui de la première courbe en ce qu'il est mis en oeuvre sur un brûleur 1 dont le tube intérieur 5 a un diamètre intérieur d'environ 3,5 mm.

Quand P = 0%, la proportion en CO est légèrement supérieure à 25%. Pourtant, on devrait trouver la même proportion en CO que pour la courbe en pointillés, c'est-à-dire 25%. En effet, pour P = 0%, les conditions d'injection sont les mêmes pour la courbe en pointillés et la courbe en trait fort puisqu'on n'injecte pas de comburant par le premier passage 8. La légère différence observée à P = 0% est liée à l'incertitude de la mesure.

Cette deuxième courbe en trait fort a un profil en pic, avec, d'une part, une partie croissant relativement fortement quand P varie entre O et environ 10% et, d'autre part, une partie décroissant relativement fortement quand P varie entre environ 10 et 20%. Les parties croissante et décroissante de la deuxième courbe correspondent respectivement aux parties croissante et décroissante du profil général en pic de la concentration axiale en CO dans la flamme produite.

Le rapport R a une valeur d'environ 3 quand P vaut 10% et d'environ 6 quand P vaut 20%.

La longueur de la flamme produite diminue quand P varie de O à environ 20 %. Il est donc possible de régler la longueur de la flamme produite de manière plus fine que dans le cas de la première courbe en pointillés.

La troisième courbe de mesure, en trait mixte, correspond à un procédé de combustion, mis en oeuvre dans le brûleur 1 de la première courbe, et où la vitesse du méthane en sortie du passage 9 est d'environ 75 m/s.

La troisième courbe est sensiblement une droite horizontale. Quand P = 0%, la proportion en CO est d'environ 2%. La troisième courbe correspond donc à la queue du profil général en pic de la concentration axiale en CO dans la flamme produite. Ainsi, la possibilité de faire varier la proportion de CO au point de mesure choisi et donc la longueur de la flamme est sensiblement nulle.

Au contraire, pour les deux premières courbes, cette possibilité existe du fait des profils non constants présentés par ces courbes.

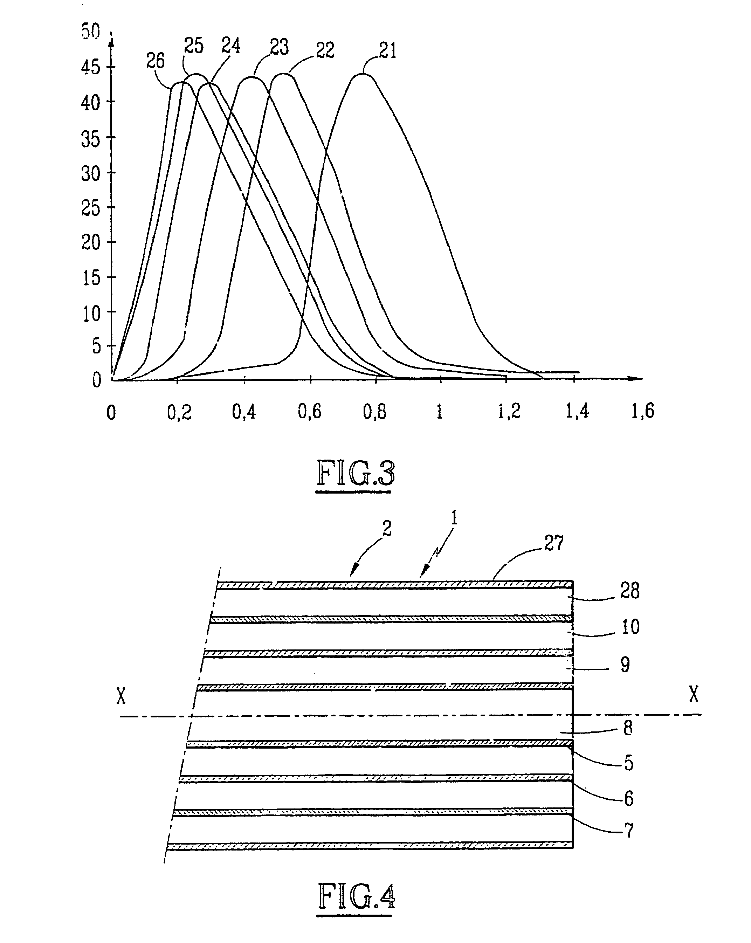

La figure 3 illustre, pour le procédé correspondant à la courbe en trait fort de la figure 2, la variation de la proportion relative en CO par rapport aux autres espèces présentes dans l'axe de la flamme X-X pour différentes proportions P d'injection d'oxygène entre les passages intérieur 8 et extérieur 10. L'abscisse représente la distance séparant le point de mesure de la sortie de l'injecteur 2.

Les courbes de mesure 21 à 26 correspondent respectivement au cas où la proportion P d'oxygène injecté dans le passage 8 par rapport à l'oxygène total injecté est d'environ 0%, 10%, 12,5%, 15%, 17,5% et 20%.

Chacune des courbes 21 à 26 a un profil en pic.

On constate que lorsque la proportion P d'oxygène injecté dans le passage intérieur 8 augmente, le pic de CO tend à se rapprocher de la sortie de l'injecteur 2. La longueur de la flamme diminue alors, la combustion étant plus rapide et la température en sortie de l'injecteur 2 étant plus importante.

On constate donc qu'en jouant sur la répartition de l'oxygène injecté entre les passages intérieur 8 et extérieur 9 d'amenée du comburant, on peut régler de manière précise la longueur de la flamme et la concentration axiale du CO, et donc de l'O₂ et du CO₂, dans celle-ci.

Pour obtenir les meilleures possibilités de réglage, la vitesse de sortie du combustible du passage intermédiaire 9 doit être comprise entre environ 1 et 15 m/s, et de préférence entre environ 5 et 15 m/s, et le rapport de vitesses R doit être compris entre 3 et 20 et de préférence entre 3 et 10.

Ainsi, avec une vitesse de combustible en sortie du passage intermédiaire 9 relativement faible et un rapport de vitesse R relativement élevé, le cisaillement entre la veine intérieure de comburant et la veine de combustible est relativement important. Cette caractéristique permet de faire varier très finement la longueur de la flamme, cette longueur diminuant lorsque le cisaillement augmente du fait de l'augmentation des turbulences et d'un mélange plus intime de la veine intérieure d'oxygène et la veine de combustible.

Pour améliorer encore les possibilités de réglage, la vitesse de sortie du comburant du deuxième passage doit être comprise entre environ 0,1 et 50 m/s et de préférence entre environ 1 et 5 m/s.

Enfin, il apparaît que les possibilités de réglage sont accrues lorsque la proportion P est comprise entre 0 et 50% et de préférence entre 0 et 20%.

Un tel procédé de combustion est utilisable en particulier dans les procédés d'élaboration des matériaux.

Par exemple, grâce aux possibilités de réglage accrues des concentrations d'espèces oxydantes CO et O₂ en sortie de l'injecteur 2, en jouant sur la proportion P, ce procédé de combustion est particulièrement adapté au procédés d'élaboration des métaux.

Pour une telle application, le procédé est de préférence mis en oeuvre sur un brûleur 1, tel que celui de la figure 4, dont l'injecteur 2 comprend un quatrième tube 26 entourant extérieurement le tube 7 de manière à délimiter avec le tube 7 un passage 27 de canalisation d'une veine extérieure d'air.

Ce procédé de combustion est également particulièrement adapté pour chauffer le verre fondu lorsqu'il est canalisé dans des « feeders » dans les procédés d'élaboration du verre. En effet, ce procédé va permettre par exemple d'obtenir une flamme suffisamment courte en sortie de l'injecteur 2, en jouant sur la proportion P, pour ne pas chauffer le coeur du verre fondu canalisé par un « feeder ».

## Revendications

1. Procédé de combustion d'un combustible dans un brûleur (1) du type comprenant un injecteur (2), lequel injecteur comporte au moins un premier passage intérieur (8) d'amenée de comburant, un passage intermédiaire (9) d'amenée de combustible entourant extérieurement le premier passage (8) d'amenée de comburant, et un deuxième passage extérieur (10) d'amenée de comburant entourant extérieurement le passage (9) d'amenée de combustible, **caractérisé en ce qu'**on alimente le passage (9) d'amenée de combustible de sorte que la vitesse de sortie du combustible de ce passage soit comprise entre environ 1 et 15 m/s, et **en ce qu'**on alimente le premier passage (8) d'amenée de comburant et le passage (9) d'amenée de combustible de sorte que le rapport R entre la vitesse de sortie du comburant du premier passage (8) d'amenée du comburant et la vitesse de sortie du combustible du passage (9) d'amenée de combustible soit supérieur à environ 3, et **en ce qu'**on modifie la proportion du débit total de comburant passant par le premier passage d'amenée de comburant permettant un réglage de la longueur de la flamme.

2. Procédé selon la revendication 1, **caractérisé en ce qu'**on alimente le passage (9) d'amenée de combustible de sorte que la vitesse de sortie du combustible de ce passage soit supérieure à environ 5 m/s.

3. Procédé selon la revendication 1 ou 2, **caractérisé en ce qu'**on alimente le premier passage (8) d'amenée de comburant et le passage d'amenée (9) de combustible de sorte que le rapport R soit inférieur à environ 20.

4. Procédé selon la revendication 3, **caractérisé en ce qu'**on alimente le premier passage (8) d'amenée de comburant et le passage d'amenée (9) de combustible de sorte que le rapport R soit inférieur à environ 10.

5. Procédé selon l'une quelconque des revendications 1 à 4, **caractérisé en ce qu'**on alimente le deuxième passage d'amenée de comburant (10) de sorte que la vitesse de sortie du comburant de ce deuxième passage soit comprise entre environ 0,1 et 50 m/s et de préférence entre environ 1 et 5 m/s.

6. Procédé selon l'une quelconque des revendications 1 à 5, **caractérisé en ce qu'**on alimente les premier (8) et deuxième (10) passages d'amenée de comburant de sorte que moins de 50%, et de préférence moins d'environ 20%, du débit total de comburant passe par le premier passage (8) d'amenée de comburant.

7. Procédé selon l'une quelconque des revendications 1 à 6, **caractérisé en ce qu'**on alimente en air un passage périphérique (28) de l'injecteur (2), lequel passage périphérique entoure extérieurement le deuxième passage (10) d'amenée de comburant.

8. Procédé selon l'une quelconque des revendications 1 à 7, **caractérisé en ce qu'**on alimente les premier (8) et deuxième (10) passages d'amenée de comburant en oxygène de pureté supérieure à 80%.

9. Procédé selon l'une quelconque des revendications 1 à 7, **caractérisé en ce qu'**on alimente le passage d'amenée de combustible essentiellement en hydrocarbure gazeux, notamment en méthane ou en butane.

## Patentansprüche

1. Verbrennungsverfahren eines Brennstoffes in einem Brenner (1), umfassend einen Injektor (2), wobei der Injektor mindestens einen ersten Innendurchgang (8) zur Zuleitung eines Sauerstoffträgers, einen Zwischendurchgang (9) zur Zuleitung des Brennstoffes, der außen den ersten Durchgang (8) zur Zuleitung des Sauerstoffträgers umgibt, und einen zweiten Außendurchgang (10) zur Zuleitung eines Sauerstoffträgers, der außen den Durchgang (9) zur Zuleitung des Brennstoffes umgibt, aufweist, **dadurch gekennzeichnet, dass** der Durchgang (9) zur Zuleitung des Brennstoffes derart gespeist wird, dass die Austrittsgeschwindigkeit des Brennstoffes aus diesem Durchgang zwischen ungefähr 1 und 15 m/s liegt, und dass der erste Durchgang (8) zur Zuleitung des Sauerstoffträgers und der Durchgang (9) zur Zuleitung des Brennstoffes derart gespeist werden, dass das Verhältnis R zwischen der Austrittsgeschwindigkeit des Sauerstoffträgers aus dem ersten Durchgang (8) zur Zuleitung des Sauerstoffträgers und der Austrittsgeschwindigkeit des Brennstoffes aus dem Durchgang (9) zur Zuleitung des Brennstoffes größer als ungefähr 3 ist, und dass das Verhältnis der Gesamtdurchflussmenge des Sauerstoffträgers durch den ersten Durchgang zur Zuleitung des Sauerstoffträgers verändert wird, um eine Einstellung der Flammenlänge zu ermöglichen.

2. Verfahren nach Anspruch 1, **dadurch gekennzeichnet, dass** der Durchgang (9) zur Zuleitung des Brennstoffes derart gespeist wird, dass die Austrittsgeschwindigkeit des Brennstoffes aus diesem Durchgang größer als ungefähr 5 m/s ist.

3. Verfahren nach Anspruch 1 oder 2, **dadurch gekennzeichnet, dass** der erste Durchgang (8) zur Zuleitung des Sauerstoffträgers und der Durchgang (9) zur Zuleitung des Brennstoffes derart gespeist werden, dass das Verhältnis R geringer als ungefähr 20 ist.

4. Verfahren nach Anspruch 3, **dadurch gekennzeichnet, dass** der erste Durchgang (8) zur Zuleitung des Sauerstoffträgers und der Durchgang zur Zuleitung (9) des Brennstoffes derart gespeist werden, dass das Verhältnis R kleiner als ungefähr 10 ist.

5. Verfahren nach einem der Ansprüche 1 bis 4,
**dadurch gekennzeichnet, dass** der zweite Durchgang (10) zur Zuleitung des Sauerstoffträgers derart gespeist wird, dass die Austrittsgeschwindigkeit des Sauerstoffträgers aus diesem zweiten Durchgang zwischen ungefähr 0,1 und 50 m/s und vorzugsweise zwischen ungefähr 1 und 5 m/s liegt.

6. Verfahren nach einem der Ansprüche 1 bis 5,
**dadurch gekennzeichnet, dass** der erste (8) und zweite (10) Durchgang zur Zuleitung des Sauerstoffträgers derart gespeist werden, dass weniger als 50 % und vorzugsweise weniger als ungefähr 20 % der Gesamtdurchflussmenge des Sauerstoffträgers durch den ersten Durchgang (8) zur Zuleitung des Sauerstoffträgers fließen.

7. Verfahren nach einem der Ansprüche 1 bis 6,
**dadurch gekennzeichnet, dass** ein Umfangsdurchgang (28) des Injektors (2) mit Luft gespeist wird, wobei der Umfangsdurchgang außen den zweiten Durchgang (10) zur Zuleitung des Sauerstoffträgers umgibt.

8. Verfahren nach einem der Ansprüche 1 bis 7,
**dadurch gekennzeichnet, dass** der erste (8) und zweite (10) Durchgang zur Zuleitung des Sauerstoffträgers mit Sauerstoff mit einer Reinheit von mehr als 80 % gespeist werden.

9. Verfahren nach einem der Ansprüche 1 bis 7,
**dadurch gekennzeichnet, dass** der Durchgang zur Zuleitung des Brennstoffes im Wesentlichen mit gasförmigem Kohlenwasserstoff, insbesondere Methan oder Butan, gespeist wird.

## Claims

1. Process for the combustion of a fuel in a burner (1) of the type comprising an injector (2), which injector includes at least an inner first oxidizer feed passage (8), an intermediate fuel feed passage (9) externally surrounding the first oxidizer feed passage (8), and an outer second oxidizer feed passage (10) externally surrounding the fuel feed passage (9), **characterized in that** the fuel feed passage (9) is supplied so that the velocity of the fuel exiting this passage is between approximately 1 and 15 m/s, **in that** the first oxidizer feed passage (8) and the fuel feed passage (9) are supplied so that the ratio R of the velocity of the oxidizer exiting the first oxidizer feed passage (8) to the velocity of the fuel exiting the fuel feed passage (9) is greater than approximately 3, and **in that** the proportion of the total oxidizer flow passing through the first oxidiser feed passage is modified, making it possible to adjust the length of the flame.

2. Process according to Claim 1, **characterized in that** the fuel feed passage (9) is supplied so that the velocity of the fuel exiting this passage is greater than approximately 5 m/s.

3. Process according to Claim 1 or 2, **characterized in that** the first oxidizer feed passage (8) and the fuel feed passage (9) are supplied so that the ratio R is less than approximately 20.

4. Process according to Claim 3, **characterized in that** the first oxidizer feed passage (8) and the fuel feed passage (9) are supplied so that the ratio R is less than approximately 10.

5. Process according to any one of Claims 1 to 4, **characterized in that** the second oxidizer feed passage (10) is supplied so that the velocity of the oxidizer exiting this second passage is between approximately 0.1 and 50 m/s and preferably between approximately 1 and 5 m/s.

6. Process according to any one of Claims 1 to 5, **characterized in that** the first (8) and second (10) oxidizer feed passages are supplied so that less than 50%, and preferably less than approximately 20%, of the total oxidizer flow passes through the first oxidizer feed passage (8).

7. Process according to any one of Claims 1 to 6, **characterized in that** a peripheral passage (28) of the injector (2) is supplied with air, which peripheral passage externally surrounds the second oxidizer feed passage (10).

8. Process according to any one of Claims 1 to 7, **characterized in that** the first (8) and second (10) oxidizer feed passages are supplied with oxygen having a purity of greater than 80%.

9. Process according to any one of Claims 1 to 7, **characterized in that** the fuel feed passage is essentially supplied with a gaseous hydrocarbon, especially with methane or butane.
